# EUROPÄISCHE PATENTSCHRIFT

(11) **EP 2 465 078 B1**
(45) Veröffentlichungstag und Bekanntmachung des Hinweises auf die Patenterteilung: **09.11.2016**
(21) Anmeldenummer: 10742826.0
(22) Anmeldetag: 13.08.2010
(51) Int. Cl.: G06K 19/14, G06K 19/06, G06K 7/14

(54) **SICHERE KENNZEICHNUNG EINES PRODUKTS**
SECURE IDENTIFICATION OF A PRODUCT
MARQUAGE SÉCURISÉ D'UN PRODUIT

(30) Priorität: 14.08.2009 DE 102009037626
(43) Veröffentlichungstag der Anmeldung: 20.06.2012
(73) Patentinhaber: Giesecke & Devrient GmbH, 81677 München (DE)
(72) Erfinder: FIEDLER, Michael, 81369 München (DE)
(86) Internationale Anmeldenummer: PCT/EP2010/061857
(87) Internationale Veröffentlichungsnummer: WO 2011/018523

(56) Entgegenhaltungen:
- EP-A2- 1 959 403
- BG-B1- 61 241
- BG-B1- 63 518
- FR-A1- 2 936 335

## Beschreibung

Die vorliegende Erfindung bezieht sich auf ein Verfahren zum Kennzeichnen eines Produkts sowie eine dementsprechende Kennzeichnungsvorrichtung.

Üblicherweise werden Produkte im Rahmen eines Herstellungsprozesses mit einer eindeutigen Produktkennzeichnung bzw. Produktidentifikation versehen, die der späteren Verifikation und/ oder Rückverfolgung des Produktes dient, da sie Rückschlüsse auf Herstellungsort und -datum, Liefer- und Exportwege, Zwischenhändler oder dergleichen bieten kann. Hierzu können Produktidentifikationen in Form von eindeutigen digitalen Kodierungen eingesetzt werden, zum Beispiel Ziffern- oder Zeichenfolgen, eindimensionale oder zweidimensionale Barcodes, Datamatrix-Codes oder dergleichen. Derartige eindeutige Produktidentifikationen werden häufig getrennt von dem eigentlichen Produktherstellungsprozess im Voraus erzeugt und erst später auf das betreffende Produkt angebracht. Um die Auslesbarkeit und Einsetzbarkeit der Produktidentifikation für eine spätere Verifikation eines im Umlauf befindlichen Produkts sicherzustellen, wird die auf das Produkt aufgebrachte Produktidentifikation kurz nach der Kennzeichnung wieder ausgelesen und in einer Produktdatenbank als Referenz für eine spätere Verifikation des betreffenden Produkts hinterlegt.

Ein derartiges Kennzeichnungsverfahren erfordert jedoch die Vertrauenswürdigkeit aller Komponenten und Beteiligten, da die Produktidentifikationen in aller Regel nicht fälschungssicher sind. In der Tat können derzeit sowohl gültige Produktidentifikationen entwendet und mit gefälschten Produkten in Verkehr gebracht werden, als auch gefälschte Produktidentifikationen in den Kennzeichnungsprozess eingebracht und auf echte Produkte aufgebracht werden, ohne das dies bemerkt werden würde.

In diesem Zusammenhang schlägt die WO 2007/028799 A1 vor, die Zufälligkeit von mikroskopischen Oberflächenstrukturen auszunutzen, indem durch eine relativ aufwändige Bildverarbeitung geeignete Mikrostrukturmerkmale des Produktmaterials bestimmt und als eindeutige Produktidentifikationen verwendet werden. Die Verifikation und Rückverfolgung des betreffenden Produkts bedarf dann einer ebenso aufwändigen mikroskopischen Analyse der Oberflächenstruktur des jeweils zu verifizierenden Produkts, um das Merkmal möglichst gut zu reproduzieren.

Ferner schlägt die DE 695 14 004 T2 ein Verfahren zur Beglaubigung von Telefax-Kopien gegenüber dem zugehörigen Originaldokument vor, bei dem das Originaldokument vor der Telefax-Übertragung zeilen- oder rasterweise analysiert wird und ein Barcode auf die Telefax-Kopie aufgebracht wird, aus dem der Inhalt des Originaldokuments (vergleichbar mit einer kryptographischen Signatur einer E-Mail Nachricht) zumindest teilweise rekonstruiert werden kann. BG 61 241 B1 offenbart ein weiteres bekanntes Verfahren zum Kennzeichnen von Produkten.

Demzufolge ist es die Aufgabe der vorliegenden Erfindung, eine Kennzeichnung eines Produkts vorzuschlagen, die die möglichst effiziente Verifikation des Produkts bei möglichst hoher Fälschungssicherheit erlaubt.

Diese Aufgabe wird erfindungsgemäß durch ein Verfahren sowie eine Vorrichtung mit den Merkmalen der unabhängigen Ansprüche gelöst. Die davon abhängigen Ansprüche beschreiben vorteilhafte Ausgestaltungen und Weiterbildungen der Erfindung.

Beim Kennzeichnen eines zuvor hergestellten Produkts wird eine eindeutige Produktidentifikation erzeugt und auf das Produkt aufgebracht. Anschließend wird die aufgebrachte Produktidentifikation wieder erfasst und in einer Produktdatenbank als Produktidentifikation des in Umlauf gebrachten Produkts hinterlegt. Erfindungsgemäß wird auch ein unabhängiges Echtheitsmerkmal bestimmt, welches die spätere Echtheitsverifikation der betreffenden Produktidentifikation und damit des Produkts erlaubt. Das bestimmte unabhängige Echtheitsmerkmal wird zusammen mit der Produktidentifikation auf das Produkt aufgebracht und auch zusammen mit der Produktidentifikation in der Produktdatenbank hinterlegt.

Die erfindungsgemäße Kennzeichnung eines Produkts wird von einer Kennzeichnungsvorrichtung vorgenommen, die eine Kennzeichnungseinrichtung umfasst, die die eindeutige Produktidentifikation zusammen mit dem unabhängigen Echtheitsmerkmal auf ein hergestelltes Produkt aufbringt, und eine Erfassungseinrichtung umfasst, welche zumindest die auf das Produkt aufgebrachte Produktidentifikation erfasst. Ferner umfasst die Kennzeichnungsvorrichtung eine Steuereinrichtung, die einerseits die auf das Produkt aufzubringende Produktidentifikation von einer Zentraleinrichtung empfängt sowie das Echtheitsmerkmal bestimmt und an die Kennzeichnungseinrichtung zum Aufbringen auf das Produkt übergibt.

Im Zusammenhang mit der vorliegenden Erfindung ist unter einer "eindeutigen Produktidentifikation" eine alphanumerische oder sonstige Kodierung zu verstehen, z.B. ein Barcode einer eindeutigen Seriennummer des Produkts, die das Produkt eindeutig kennzeichnet und identifizierbar macht, da sie an kein weiteres Produkt vergeben wurde/wird. Unter einem "unabhängigen Echtheitsmerkmal" ist demgegenüber eine sich auf die Produktidentifikation beziehende Markierung zu verstehen, die das betreffende Produkt zwar hinreichend individualisiert, aber nicht notwendigerweise in dem obigen Sinne eindeutig sein muss. Insbesondere umfasst das unabhängige Echtheitsmerkmal außer einer verifizierbaren Angabe hinsichtlich der Echtheit der Produktidentifikation keine weiteren produktspezifischen oder anderweitig mit dem Produkt in Zusammenhang stehenden wesentlichen Informationen, z.B. hinsichtlich Produkteigenschaften, seines Lebenszyklus, Herstellungsorts, Herstellungsverfahrens oder -datums, einer verwendeten Herstellungsvorrichtung oder dergleichen. Das Echtheitsmerkmal wird demnach unabhängig von solchen produkt- und herstellungsspezifischen Informationen separat erzeugt oder in der Produktidentifikation bestimmt, die bei Kenntnis einem Fälscher Rückschlüsse auf das Echtheitsmerkmal ermöglichen und somit die Fälschungssicherheit der Produktidentifikation beeinträchtigen können. Insbesondere kann neben dessen separater Erzeugung ein Echtheitsmerkmal auch als ein in der auf das Produkt aufgebrachten Produktidentifikation ohnehin vorhandener Bildartefakt festgelegt werden, sofern dieser Bildartefakt zufallsbedingt ist und nicht auf systematische Ursachen bei der Produktkennzeichnung zurückzuführen ist.

Das Echtheitsmerkmal ermöglicht eine Prüfung der Produktidentifikation auf Echtheit, da sie über die Produktdatenbank eindeutig mit der Produktidentifikation verknüpft ist und dadurch bei einem im Umlauf befindlichen und erfindungsgemäß gekennzeichneten Produkt verifiziert werden kann, ob die Produktidentifikation zusammen mit dem korrekten Echtheitsmerkmal auf dem Produkt vorliegt oder, sofern dies nicht der Fall ist, ob eine Fälschung vorliegt. Ein Einschleusen einer gefälschten Produktidentifikation in die Produktdatenbank oder ein Verwenden gefälschter Produktidentifikationen ist nicht möglich, da gefälschte Produktidentifikationen den Prozess des Bestimmens eines unabhängigen Echtheitsmerkmals und des gemeinsamen Aufbringens und Hinterlegens zusammen mit der Produktidentifikation nicht durchlaufen haben und insofern nicht korrekt in der Produktdatenbank registriert sind. Ebenso wird das Entwenden einer echten Produktidentifikation zur Kennzeichnung eines gefälschten Produkts unterbunden, denn auch eine entwendete Produktidentifikation auf einem gefälschten Produkt hat den Prozess des Bestimmens eines Echtheitsmerkmals und gemeinsamen Aufbringens und Hinterlegens nicht durchlaufen.

Da die Kennzeichnungsvorrichtung, welche die Produktidentifikation zusammen mit dem Echtheitsmerkmal auf das Produkt aufbringt, unter der Kontrolle des Produktherstellers steht, stellt die Erfindung auch sicher, dass eine in der Produktdatenbank hinterlegte Produktidentifikation zusammen mit dem zugehörigen Echtheitsmerkmal tatsächlich im Rahmen eines Herstellungsprozesses auf ein echtes Produkt aufgebracht wurde. Entsprechend ist die Kennzeichnungsvorrichtung vorzugsweise in eine größere Herstellungsvorrichtung oder -anlage des Produktherstellers eingebunden und steht über die Steuereinrichtung mit einer Zentraleinrichtung in Verbindung, von der sie die eindeutige Produktidentifikation empfängt. Die Zentraleinrichtung umfasst vorzugsweise die Produktdatenbank, so dass die Steuereinrichtung das Echtheitsmerkmal und die von der Erfassungseinrichtung erfasste Produktidentifikation zum Hinterlegen in der Produktdatenbank an die Zentraleinrichtung weiterleitet.

Vorzugsweise wird das Echtheitsmerkmal von der Steuereinrichtung derart bestimmt, dass es insbesondere unabhängig von dem Kennzeichnungsprozess und der Kennzeichnungsvorrichtung bzw. deren Steuer-, Kennzeichnungs- und Erfassungseinrichtung ist. Das heißt, es finden sich in dem Echtheitsmerkmal keine Informationen wieder, die (im Klartext) technische Merkmale, Elemente oder anderweitige charakteristische Eigenschaften der Kennzeichnungsvorrichtung betreffen oder kodieren, z.B. charakteristische Druckbildartefakte der Kennzeichnungseinrichtung oder charakteristische Artefakte in von der Erfassungseinrichtung erfassten Digitalbildern. Darüber hinaus kann das Echtheitsmerkmal auch derart bestimmt werden, dass es unabhängig von einem Herstellungsprozess bzw. den daran beteiligten Herstellungsvorrichtungen und -anlagen ist und insofern wesentlich fälschungssicherer als solche Merkmale ist, die aus technischen oder sonstigen mit der Produktkennzeichnung oder Produktherstellung im Zusammenhang stehenden Eigenschaften abgeleitet werden können, da erfindungsgemäß vorliegend keinerlei Anhaltspunkte für eine Fälschung bestehen. Vorzugweise wird diese Unabhängigkeit durch Verwendung von Zufallsprozessen bei der Erzeugung des Echtheitsmerkmals erreicht. Zudem kann ein unabhängiges Echtheitsmerkmal auch unabhängig erzeugt werden, zum Beispiel von einer weiteren Instanz, die mit der Produktherstellung und -kennzeichnung nicht in Zusammenhang steht.

Da die Produktidentifikation in derjenigen Form in der Produktdatenbank hinterlegt wird, in der sie auf das Produkt aufgebracht und von dem Produkt erfasst wurde, wird das Echtheitsmerkmal also in der von dem Produkt erfassten, konkreten Form als Referenzechtheitsmerkmal hinterlegt, und nicht etwa in der abstrakt prototypischen bzw. parametrierten Form der mathematischen Operationen, mit denen es zunächst bestimmt wurde. Dadurch erhöht sich die spätere Verifizierbarkeit eines erfassten Vergleichsechtheitsmerkmals gegenüber dem in der Datenbank hinterlegten Referenzechtheitsmerkmal, denn es muss beim Verifizieren nicht indirekt überprüft werden, ob das Vergleichsechtheitsmerkmal mit den gleichen mathematischen Operationen erzeugt wurde, mit denen auch das Referenzechtheitsmerkmal erzeugt wurde, sondern es kann - viel einfacher - direkt überprüft werden, ob das Vergleichsechtheitsmerkmal und das hinterlegte Referenzechtheitsmerkmal (im Wesentlichen) übereinstimmen. In gleicher Weise kann auch die auf das Produkt zusammen mit dem Echtheitsmerkmal aufgebrachte Produktidentifikation als Vergleichsproduktidentifikation erfasst und gegenüber der hinterlegten Referenzproduktidentifikation verifiziert werden.

Das Echtheitsmerkmal wird vorzugsweise sowohl von der Kennzeichnungseinrichtung zusammen mit der Produktidentifikation auf das Produkt aufgebracht als auch von der Erfassungseinrichtung zusammen mit der Produktidentifikation von dem Produkt erfasst, an die Steuereinrichtung weitergegeben und von dieser zusammen mit der Produktidentifikation an die Zentraleinrichtung zum Hinterlegen in der Produktdatenbank weitergeleitet. Das Echtheitsmerkmal wird also vorzugsweise im gleichen Arbeitsschritt bzw. wenigstens im engen zeitlichen Zusammenhang mit der Produktidentifikation aufgebracht, erfasst und hinterlegt.

Hierbei wird das Echtheitsmerkmal derart verknüpft mit der Produktidentifikation auf das Produkt aufgebracht, dass es aus einer (unerlaubten) Kopie der aufgebrachten Produktidentifikation nicht ableitbar ist. Das zusammen mit der Produktidentifikation auf das Produkt aufgebrachte Echtheitsmerkmal ist also derart ausgestaltet, dass es durch ein Kopieren hinreichend unkenntlich bzw. nicht reproduzierbar oder verifizierbar gemacht wird. Dies kann z.B. durch eine derartige Ausgestaltung des Echtheitsmerkmals erreicht werden, dass es z.B. in dem obligatorischen Detektorrauschen eines Kopiergeräts untergeht. Eine derart kopierte Produktidentifikation mit einem weitgehend unkenntlichen Echtheitsmerkmal kann nicht gegenüber der zusammen mit dem Referenzechtheitsmerkmal hinterlegten Referenzproduktidentifikation als echt verifiziert werden.

Vorzugsweise wird das Echtheitsmerkmal derart eng mit dem Produktmerkmal verknüpft, dass es für einen Betrachter visuell nicht von der Produktidentifikation zu unterscheiden ist. Da der Betrachter somit das Echtheitsmerkmal (bzw. sogar sein Vorhandensein) nicht kennt, kann das Echtheitsmerkmal auch nicht ohne weiteres mit technischen Mitteln gefälscht werden. Dadurch wird die Fälschungssicherheit des Echtheitsmerkmals weiter erhöht, da es von einem potentiellen Fälscher auf dem Produkt gar nicht identifiziert und aus einer Produktidentifikation extrahiert werden kann. Somit kann ein Fälscher mangels Kenntnis des Echtheitsmerkmals einen Kopierprozess auch nicht hinsichtlich des möglichst genauen Kopierens des Echtheitsmerkmals optimieren.

Gleichzeitig bietet eine möglichst enge Verknüpfung der Produktidentifikation und des Echtheitsmerkmals einen weiteren Sicherheitsgewinn, da weder die Produktidentifikation noch das Echtheitsmerkmal separat, unabhängig von dem jeweils anderen manipuliert werden kann. Dies kann beispielsweise durch Hinterlegen eines gemeinsamen Produktdatensatzes erreicht werden, in den die erfasste Produktidentifikation und das zugehörige Referenzechtheitsmerkmal für Dritte nicht separat erkennbar eingehen, z.B. in verschlüsselter oder anderweitig verwürfelter und nicht umkehrbarer Form.

Vorzugsweise wird als Kennzeichnungseinrichtung ein Druck- bzw. Reproduktionsgerät verwendet, zum Beispiel ein Tintenstrahldrucker, Laserdrucker oder dergleichen, welcher die erzeugte Produktidentifikation entweder direkt auf das Produkt oder dessen Umverpackung oder auf ein Etikett aufdruckt, das anschließend durch Aufkleben, Aufheften oder dergleichen möglichst unumkehrbar auf das Produkt aufgebracht wird. Entsprechend wird als Erfassungseinrichtung vorzugsweise eine Abtasteinrichtung eingesetzt, zum Beispiel ein Scanner oder eine Kamera, die die auf dem Produkt aufgebrachte Produktidentifikation (vorzugsweise zusammen mit dem Echtheitsmerkmal) digital abtastet und über die Steuereinrichtung in Form eines integrierten Produktdatensatzes an die Produktdatenbank überträgt. Hierbei ist die Produktidentifikation erfindungsgemäß eine eindeutige Kodierung, nämlich ein Datamatrix-Code, der in der erfassten graphischen Form oder als aufgelöste Zeichen- oder Symbolkette in der Produktdatenbank als Produktidentifikation hinterlegt wird.

Während die Produktidentifikation und das Echtheitsmerkmal prinzipiell in beliebiger Ausgestaltung auf das Produkt aufgebracht werden können, ist es erfindungsgemäß, die Produktidentifikation in Form eines Druckbildes vorzusehen und dessen Echtheitsmerkmal als Artefakt des Druckbilds auf das Produkt aufgebracht, bevorzugt in das Druckbild eingearbeitet, ist. Das resultierende artefaktbehaftete Druckbild wird dann von dem Druck- oder Reproduktionsgerät auf das Produkt aufgebracht und von dem Erfassungs- oder Abtastgerät digital erfasst und in der Produktdatenbank hinterlegt. Ein solches Echtheitsmerkmal als (lokaler oder globaler) Artefakt eines Druckbildes kann beispielsweise ein ausschließlich für diesen Zweck synthetisch erzeugtes Echtheitsmerkmal sein, das sich insbesondere nicht auf Produktions-, Geräteparameter oder technische Eigenschaften der Reproduktionseinrichtung oder des Produktionsprozesses zurückführen lässt, sondern mittels eines Zufallsgenerators möglichst gleichverteilt bestimmt wurde.

Erfindungsgemäß wird die Produktidentifikation mit einer individuellen Rauschabweichung, einer individuellen Kontrast- oder Farbabweichung, einer individuellen Verzeichnung, Verzerrung und/oder Verkippung oder einer individuellen Translation und/ oder Rotation gegenüber dem Produkt als Echtheitsmerkmal verknüpft und auf das Produkt aufgebracht.

So kann das Echtheitsmerkmal beispielsweise eine zufällige aber konkrete Rauschabweichung und/ oder eine zufällige aber konkrete Kontrast- oder Farbabweichung sein, die auf die Produktidentifikation aufaddiert wird und so Intensitäten, Kontraste und/oder Farben des Druckbilds der Produktidentifikation lokal manipuliert. Hierbei bilden die konkreten lokalen (bildpunktweisen) Intensitäts-, Kontrast- und/oder Farbabweichungen gegenüber der ursprünglichen Produktidentifikation das Echtheitsmerkmal und nicht etwa die (prototypischen bzw. abstrakten) Parameter derjenigen statistischen Verteilungen, auf denen die konkreten Rausch-, Kontrast- und/oder Farbabweichungen beruhen. Hierbei können die Verteilungsparameter so gewählt werden, dass die konkreten Rausch-, Kontrast- und/oder Farbabweichungen zwar bei einer erneuten Erfassung der Produktidentifikation zu Verifikationszwecken reproduziert werden können, ein (unerlaubtes) Kopieren diese konkreten Rausch-, Kontrast- und/oder Farbabweichungen jedoch durch einen zusätzlichen Rauschprozess des jeweiligen Kopiergeräts derart verändert, dass sie nicht mehr als hinreichend exaktes Vergleichsechtheitsmerkmal geeignet sind. Prinzipiell können beliebige lineare und nichtlineare Bildverarbeitungsoperatoren und -filter zur Erzeugung des Echtheitsmerkmals eingesetzt werden, sofern sie die oben genannten Bedingungen erfüllen.

Ebenso sind synthetische Verzeichnungen, Verzerrungen und/oder Verkippungen des Druckbilds der Produktidentifikation gemäß der Erfindung vorgesehen oder auch Translationen, Rotationen, Skalierungen oder sonstige affine Abbildungen der Produktidentifikation relativ zu dem Produkt oder dessen Umverpackung. Zum Beispiel kann ein geringer Versatz und/ oder eine leichte Rotation gegenüber der standardmäßigen Druckposition einer Produktidentifikation auf dem Produkt als Echtheitsmerkmal eingesetzt werden. Derartige lokale oder globale Transformationen können auch kombiniert angewandt werden, um entsprechend komplexere Echtheitsmerkmale zu erhalten.

Vorzugsweise wird aus der zusammen mit dem Echtheitsmerkmal erfassten Produktidentifikation lediglich ein geeigneter Ausschnitt ausgewählt und in der Datenbank als Referenzproduktidentifikation abgelegt, um Speicherplatz und Rechenzeit einzusparen. Dieser Ausschnitt wird dann derart aus der erfassten Produktidentifikation ausgewählt, dass aus diesem das Echtheitsmerkmal hinreichend genau als Referenzechtheitsmerkmal abgeleitet werden kann, so dass ein im Laufe des Produktzyklus abgeleitetes Vergleichsechtheitsmerkmal gegenüber dem auf diesem Ausschnitt basierenden Referenzechtheitsmerkmal verifiziert werden kann. Alternativ kann aber auch die vollständige Produktidentifikation erfasst und zusammen mit dem Echtheitsmerkmal in der Produktdatenbank hinterlegt werden und lediglich ein geeigneter Ausschnitt der hinterlegten Produktidentifikation definiert werden, aus dem das Echtheitsmerkmal als Referenzechtheitsmerkmal hinreichend genau ableitbar ist. Im Laufe des Produktzyklus wird dann zu Verifikationszwecken ein Vergleichsechtheitsmerkmal ermittelt, das gegenüber dem hinterlegten, aus dem definierten Ausschnitt hervorgehenden Referenzechtheitsmerkmal verifizierbar ist, z.B. weil es genau aus dem entsprechenden Ausschnitt der Vergleichsproduktidentifikation angeleitet wird.

In beiden Fällen wird in der Produktdatenbank zusätzlich zu der Referenzproduktidentifikation und dem Referenzechtheitsmerkmal eine Definition des betreffenden Ausschnitts hinterlegt, z.B. seine Koordinaten, so dass beim späteren Ermitteln eines Vergleichsechtheitsmerkmals genau der Ausschnitt einer Vergleichsproduktidentifikation berücksichtigt werden kann, aus dem bereits das Referenzechtheitsmerkmal abgeleitet wurde.

Vorzugsweise wird das Kennzeichnen des Produkts und das Erfassen der aufgebrachten Produktidentifikation zusammen mit dem Echtheitsmerkmal im Rahmen eines Herstellungsprozesses des Produkts bzw. seiner Umverpackung oder begleitender Dokumente des betreffenden Produkts durchgeführt, welches ebenfalls die Produktidentifikation tragen sollen. Hierbei wird die Produktidentifikation vorzugsweise zentralisiert und separat von dem Herstellungsprozess und der Kennzeichnungsvorrichtung durch eine Zentraleinrichtung erzeugt, welche vorzugsweise auch die Produktdatenbank umfasst. Sofern die Zentraleinrichtung und die Herstellungsvorrichtung beziehungsweise Kennzeichnungsvorrichtung separate und an verschiedenen Standorten befindliche Einheiten sind, stehen sie über ein (möglichst gesichertes) Datenkommunikationsnetz in Datenkommunikation, zum Beispiel zum Übertragen der erzeugten Produktidentifikation von der Zentraleinrichtung an die Kennzeichnungseinrichtung und der erfassten Produktidentifikation und dem bestimmten Echtheitsmerkmal von der Erfassungseinrichtung an die Zentraleinrichtung bzw. deren Produktdatenbank.

Weitere Merkmal und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Fig.1: ein Ausführungsbeispiel einer Anordnung und eines Verfahrens zum Kennzeichnen von Produkten; und
- Fig.2: ein Beispiel einer Produktidentifikation mit Echtheitsmerkmal;
- Fig. 3: ein weiteres Beispiel einer Produktidentifikation mit Echtheitsmerkmal.

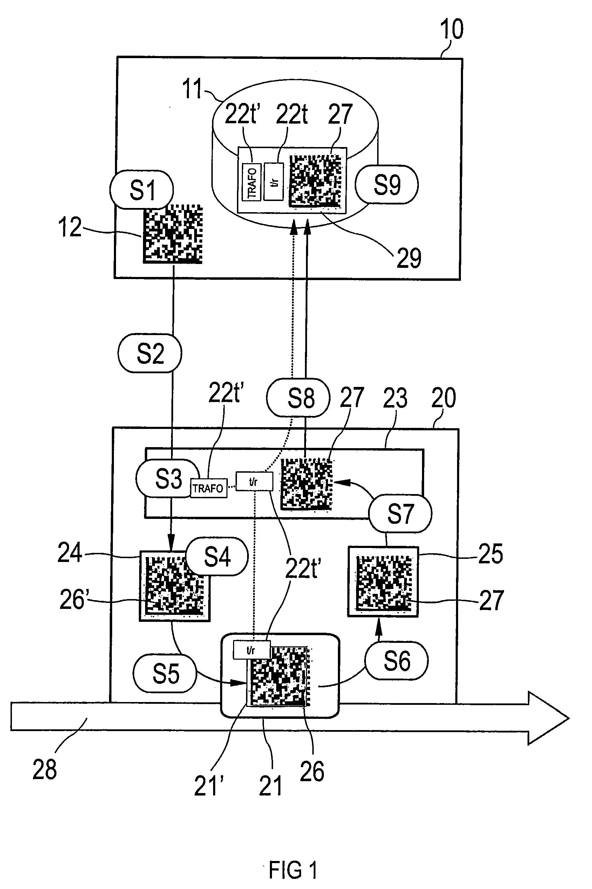

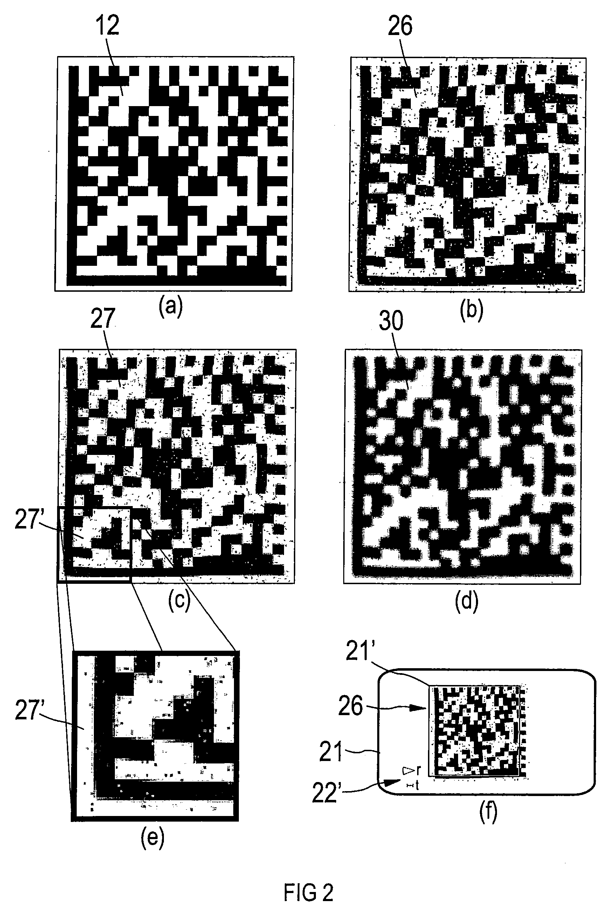

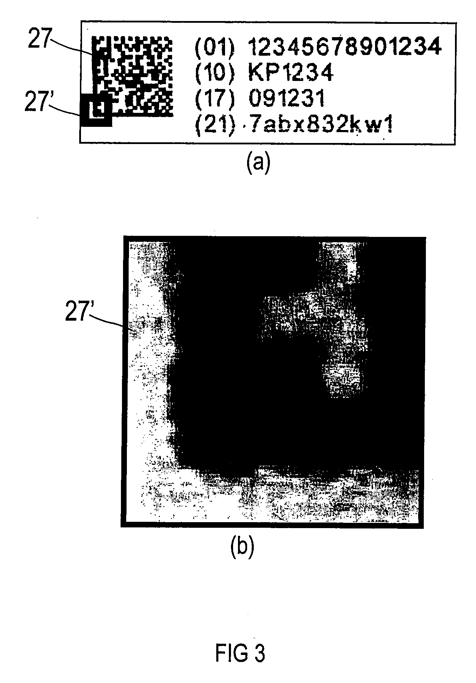

Figur 1 skizziert eine Anordnung zum Kennzeichnen von Produkten 21, bestehend aus einer Zentraleinrichtung 10 sowie einer Kennzeichnungsvorrichtung 20, die über geeignete Datenkommunikationsschnittstellen und ein Datenkommunikationsnetzwerk miteinander in Datenkommunikation treten können. Die Zentraleinrichtung 10 umfasst im Wesentlichen eine Produktdatenbank 11 zum Speichern von produktspezifischen Daten, insbesondere von Produktdatensätzen 29, die zumindest eine dem jeweiligen Produkt 21 eindeutig zugeordnete Produktidentifikation 27 sowie ein mit dieser verbundenes unabhängiges Echtheitsmerkmal 22 umfassen. Das Echtheitsmerkmal 22 kann in dem Produktdatensatz 29 sowohl in Form von separaten Transformationsdaten 22t', 22t, die zur Erzeugung des Echtheitsmerkmals 22 eingesetzt wurden, als auch - und bevorzugt - intrinsisch mit der transformierten Produktidentifikation 27 verknüpft vorliegen. Die Figuren 2 und 3 zeigen Beispiele für Produktidentifikationen 12 in Form eines Datamatrix-Codes (zweidimensionaler Barcode) und deren weitere Bearbeitungsstufen 26, 27, 27', 30 und Manipulationen im Rahmen des in Fig. 1 skizzierten Kennzeichnungsverfahrens.

Die Kennzeichnungsvorrichtung 20 umfasst zumindest eine Steuereinrichtung 23, eine Kennzeichnungseinrichtung 24 sowie eine Erfassungseinrichtung 25, die eine Kennzeichnung des Produktes 21 und dessen Registrierung in der Produktdatenbank 11 im Rahmen seines Herstellungsprozesses 28 vornehmen. Sowohl die Zentraleinheit 10 als auch die Kennzeichnungsvorrichtung 20 umfassen die üblichen Komponenten und Hard- und Softwareeinheiten, die zu deren Betrieb benötigt werden, zum Beispiel Prozessoren, Bussysteme, Speichereinrichtungen und dergleichen. Derartige herkömmliche Komponenten werden nachfolgend nur erwähnt, sofern sie für die vorliegende Erfindung von Bedeutung sind. In diesem Zusammenhang kann zumindest die Steuereinrichtung 23 der Kennzeichnungsvorrichtung 20 als übliche Computereinrichtung ausgestaltet sein, die ihrerseits alle notwendigen Komponenten umfasst, um einerseits mit der Zentraleinheit 10 in Datenkommunikation treten zu können und andererseits eine Datenakquisition und einen Datenaustausch mit der Kennzeichnungseinrichtung 24 und der Erfassungseinrichtung 25 vornehmen zu können. Hierbei kann die Kennzeichnungseinrichtung 24 als Reproduktions- bzw. Druckgerät ausgestaltet sein und die Erfassungseinrichtung 25 als vorzugsweise besonders hochauflösendes Abtast- oder Scangerät.

Die Kennzeichnungsvorrichtung 20 kann Teil einer größeren Herstellungsvorrichtung (nicht dargestellt) und als solches geeignet in einen Herstellungsprozess 28 integriert sein, in dessen Verlauf ein Produkt 21 zunächst hergestellt wird, dann durch die Kennzeichnungsvorrichtung 20 kennzeichnet und schließlich verpackt und zur Ausgabe an den Endkunden vorbereitet wird. Selbstverständlich kann die Kennzeichnungsvorrichtung 20 auch an jeder beliebigen anderen Stelle in einem Herstellungsprozess 28 integriert sein und gegebenenfalls mit weiteren bei der Herstellung des Produktes 21 benötigten Einrichtungen beliebig interagieren und/oder mit ihnen verzahnt sein. Lediglich aus Übersichtlichkeitsgründen wird die Kennzeichnungsvorrichtung 20 in Fig. 1 weitgehend isoliert von weiteren Herstellungsschritten und -einrichtungen dargestellt.

Zur Kennzeichnung des Produkts 21 wird in Schritt S1 zunächst eine eindeutige Produktidentifikation 12 von der Zentraleinrichtung 10 erzeugt, zum Beispiel von einem geeigneten Code-Generator oder dergleichen. Diese Produktidentifikation 12 kann prinzipiell eine beliebige digital auslesbare, eindeutige Kennzeichnung des Produkts 21 sein, zum Beispiel eine Zahlen- oder Zeichenkette oder ein graphischer Code, wie zum Beispiel ein Barcode, ein Datamatrix-Code oder dergleichen, der z.B. eine Chargen- oder Seriennummer des Produkts 21 kodiert. In Schritt S2 wird die erzeugte Produktidentifikation 12 über eine geeignete Datenkommunikationsverbindung an die Steuereinrichtung 23 der Kennzeichnungsvorrichtung 20 digital übertragen, welche den nachfolgenden Prozess des Kennzeichnens (Schritte S3 bis S5) und des Registrieren (Schritte S6 bis S9) des Produkts 21 in der Produktdatenbank 11 steuert.

In Schritt S3 verknüpft die Steuereinrichtung 23 ein unabhängiges Echtheitsmerkmal 22 mit der Produktidentifikation 12, um diese anschließend gemeinsam auf das Produkt 21 aufzubringen. Das unabhängige Echtheitsmerkmal 22 wird hierbei zunächst in Form von Transformationsdaten 22t' (TRAFO) bereitgestellt, die bei Anwendung auf die als Digitalbild vorliegende Produktidentifikation 12 (also bei Transformation der Produktidentifikation 12 gemäß den Transformationsdaten 22t' als Transformationsparameter) eine transformierte Produktidentifikation 26' ergeben, die das von den Transaktionsdaten 22t' definierte Echtheitsmerkmal 22 und die Produktidentifikation 12 in nicht ohne weiteres separierbarer Form umfasst. Das unabhängige Echtheitsmerkmal 22 entspricht dann genau der Differenz der transformierten Produktidentifikation 26' gegenüber der ursprünglich erzeugten, untransformierten Produktidentifikation 12. Die Transformationsdaten 22t' bilden also eine abstrakte Transformationsvorschrift, gemäß der das konkrete Echtheitsmerkmal 22 in die Produktidentifikation 12 eingearbeitet wird. Sofern die abstrakten Transformationsdaten 22t' eine Zufallskomponente umfassen, z.B. eine Zufallsvariable als Parameter einer statistischen Verteilung eines Rauschprozesses, resultiert daraus ein konkretes Echtheitsmerkmal 22 in Form eines konkreten Rauschmusters, das mit der digitalen Produktidentifikation 12 (additiv oder multiplikativ) verknüpft ist.

Das Transformationsdaten 22t' werden hierbei derart ausgewählt, dass sich ein Echtheitsmerkmal 22 ergibt, welches zumindest unabhängig von der Kennzeichnungsvorrichtung 20 bzw. deren Reproduktionsgerät 24 und/oder Abtastgerät 25 ist, um mögliche Rückschlüsse auf das Echtheitsmerkmal 22 aufgrund von Kenntnissen über die Kennzeichnungsvorrichtung 20 zu verhindern. Darüber hinaus kann das Echtheitsmerkmal 22 auch unabhängig von dem gesamten Herstellungsprozess 28 bzw. von weiteren hersteller- oder produktabhängigen Gegebenheiten und Eigenschaften sein, so dass diesbezügliche Kenntnisse zur Fälschung des Echtheitsmerkmals 22 auch nicht verwendet werden können. Insbesondere gehen in die Erzeugung des unabhängigen Echtheitsmerkmals 22 außer Informationen, die seine Funktion als Echtheitsmerkmal 22 betreffen, möglichst überhaupt keine weiteren produktspezifischen oder anderweitig mit dem Produkthersteller oder dem Produkt 21 und seiner Herstellung in Zusammenhang stehenden wesentlichen Informationen ein, wie z.B. Daten, die Produkteigenschaften, Produktlebenszyklen, Herstellungsorte, -verfahren, -daten, -vorrichtungen oder dergleichen betreffen.

Insofern betreffen die Transformationsdaten 22t' beliebige, synthetisch erzeugte Bildtransformationen, die auch örtlich unabhängig von der Produktherstellung oder -kennzeichnung erzeugt werden können. Insbesondere geht in die Transformationsdaten 22t' auch eine Zufallskomponente ein, um die Unabhängigkeit des Echtheitsmerkmals 22 zu verstärken. Insbesondere können auch lokale oder globale Kontrast- oder Farbkomponentenänderungen oder beliebige digitale Filter und Operatoren als ein Echtheitsmerkmal 22 bildende Transformationen verwendet werden. Zum Beispiel zeigen die Figuren 2a und 2b eine digital erzeugte, ideale Produktidentifikation 12 und eine basierend auf Transformationsdaten 22t' erzeugte transformierte Produktidentifikation 26, bei der das Echtheitsmerkmal 22 aus einer Kombination eines Impulsrauschens (vgl. Punktartefakte in Fig. 2b) und einer bereichsweisen geometrischen Transformation besteht, die sich in tonnen- oder kissenartigen lokalen Verzerrungen äußert. Alternativ zu der in Fig. 1 gezeigten transformationsbasierten, synthetischen Erzeugung eines Echtheitsmerkmals 22 kann das Echtheitsmerkmal 22 auch, wie in Fig. 3 illustriert, ausschließlich aus einer rauschbedingten oder anderweitigen Bildverschlechterung abgeleitet werden, die sich durch das Aufdrucken und/ oder anschließende Abtasten der digital erzeugten Produktidentifikation ohnehin ergibt. Der Ausschnitt der Fig. 3b zeigt deutlich die Auswirkung solcher Rausch- bzw. Bildverschlechterungsprozesse und deren Eignung als reproduzierbares Echtheitsmerkmal. Darüber hinaus kann als Echtheitsmerkmal 22 auch ein ohnehin vorhandener, zufälliger und erkennbarer Bildartefakt in der aufgedruckten Produktidentifikation 26 festgelegt werden, sofern dieser nicht auf charakteristische Eigenschaften der Kennzeichnungsvorrichtung 20 zurückzuführen ist, wie z.B. auf einen systematischen und reproduzierbaren Artefakt aufgrund eines defekten Reproduktions- oder Abtastgeräts 24, 25.

Die in Schritt S3 erzeugte transformierte Produktidentifikation 26' wird anschließend in Schritt S4 von dem Reproduktionsgerät 24 ausgedruckt, z.B. in Form eines auf das Produkt 21 aufzubringenden Labels oder dergleichen. Das Reproduktionsgerät 24 kann beispielsweise ein beliebiger Drucker sein, der nach einem beliebigen Druckverfahren arbeitet, beispielsweise ein Laserdrucker oder dergleichen. Insbesondere kann das Reproduktionsgerät 24 auch eine Einrichtung zum Erzeugen von geprägten, optisch variablen Strukturen oder anderen als eindeutige Produktidentifikation verwendbaren Sicherheitselementen sein, beispielsweise eine Stichtiefdruckeinrichtung, eine Prägeeinrichtung oder dergleichen.

In Schritt S5 wird die von dem Reproduktionsgerät 24 reproduzierte transformierte Produktidentifikation 26' schließlich auf dem Produkt 21 oder dessen Umverpackung möglichst derart aufgebracht, dass die Produktidentifikation 26' nicht ohne Zerstörung des Produkts 21 entfernt, ausgetauscht oder manipuliert werden kann. In Schritt S5 kann neben den lokale/bereichsweise Bildtransformationen definierenden Transformationsdaten 22t' eine weitere globale Transformation (bzw. affine Abbildung) definiert durch Transformationsdaten 22t angewandt werden, indem die transformierte Produktidentifikation 26' z.B. mit einem leichten Versatz *t* oder einer leichten Rotation r gegenüber einem Bereich 21' des Produkts 21 aufgebracht wird, der für das Aufbringen einer Produktidentifikation standardmäßig vorgesehen ist und auf dem Produkt 21 selbstverständlich nicht angegeben ist. Dies wird z.B. anhand von Fig. 2f deutlich, in der die transformierte Produktidentifikation 26' gegenüber der vorgegebenen Position 21' um die Distanz t versetzt und um den Winkel r rotiert wurde, um die aufgebrachte, transformierte Produktidentifikation 26 zu erhalten, die nunmehr ein Echtheitsmerkmal 22 umfasst, das aus einer lokalen/bereichsweisen Transformation 22t' (Schritt S3) sowie einer globalen, affinen Transformation 22t (t/r) entstanden ist.

Die auf das Produkt 21 aufgebrachte, transformierte Produktidentifikation 26 wird anschließend in Schritt S6 zum Zwecke der Registrierung des Produkts 21 in der Produktdatenbank 11 von dem Abtastgerät 25 als digitale, abgetastete Produktidentifikation 27 wieder erfasst. Das Abtastgerät 25 kann hierbei z.B. ein digitaler Scanner, eine digitale Kamera oder dergleichen sein, die ein möglichst hochwertiges und hochauflösendes digitales Abbild 27 der Produktidentifikation 26 anfertigt, aus dem das Echtheitsmerkmal 22 möglichst gut reproduziert werden kann.

Der Vorgang des Aufbringens der Produktidentifikation 26 auf das Produkt 21 in Schritt S5 und des anschließenden Erfassens der aufgebrachten Produktidentifikation 27 in Schritt S6 sowie des Hinterlegens der erfassten (und nicht der aufgebrachten) Produktidentifikation 27 als Referenzdatensatz 29 in der Produktdatenbank 11 dient der möglichst optimalen späteren Verifikation der auf dem im Umlauf befindlichen Produkt 21 aufgebrachten Produktidentifikation 26. Diese ist dann auch digital zu erfassen, um mit dem hinterlegten Referenzdatensatz 29 als Vergleichsdaten vergleichbar zu sein. Das Erfassen der Produktidentifikation 27 in Schritt S6 hat nämlich in der Regel geringe Bildverschlechterungen der erfassten Produktidentifikation 27 gegenüber der aufgebrachten Produktidentifikation 26 zu Folge, wie anhand eines Vergleichs der Figuren 2b und 2c zu erkennen ist. Hierbei ist allerdings ein derart hochwertiges Abtastgerät 25 vorzusehen, dass das Echtheitsmerkmal 22 aus der erfassten Produktidentifikation 27 noch ableitbar ist (vgl. Fig. 2c). Um später erfasste Vergleichsproduktidentifikationen mit ihren Vergleichsechtheitsmerkmalen dennoch gegenüber einem Referenzdatensatz 29 verifizieren zu können, wird in der Produktdatenbank 11 nicht die ursprünglich erzeugte Produktidentifikation 12 zusammen mit den Transformationsdaten 22t', 22t in der Produktdatenbank 11 hinterlegt, sondern lediglich die erfasste, transformierte Produktidentifikation 27, aus der das entsprechende Echtheitsmerkmal 22 eindeutig hervorgeht.

In Schritt S7 wird die erfasste Produktidentifikation 27 von dem Abtastgerät 25 an die Steuereinrichtung 23 übergeben, damit diese den in der Produktdatenbank 11 zu hinterlegenden Datensatz 27, 22t', 22t in Schritt S8 zusammenstellt und an die Zentraleinrichtung 10 überträgt. Wie bereits zuvor angedeutet kann hierbei auch ausschließlich die erfasste Produktidentifikation 27 an die Zentraleinrichtung 10 übergeben werden, sofern aus dieser das Echtheitsmerkmal 22 hinreichend genau hervorgeht. Sofern jedoch der Produktdatensatz 29 die Transformationsdaten 22t', 22t umfasst, kann eine Plausibilitätsprüfung der hinterlegten Produktidentifikation 27 vorgenommen werden, indem geprüft wird, ob das Echtheitsmerkmal 22 überhaupt eine Folge der vorliegenden Transformationsdaten 22t', 22t sein kann.

Aus solchen Sicherheitserwägungen heraus oder wenn z.B. die Transformationsdaten 22t, d.h. Versatz und Rotation t/r, aus der erfassten Produktidentifikation 27 nicht ausreichend genau hervorgehen, z.B. weil lediglich die Produktidentifikation 27 und nicht ein größerer Ausschnitt des Produkts 21 erfasst wurde, aus dem Versatz und Rotation gegenüber dem Bereich 21' ableitbar wären, können die Transformationsdaten 22t' (TRAFO) und/ oder 22t (t/r) zusätzlich zu der Produktidentifikation 27 in der Produktdatenbank 11 hinterlegt werden. Dies kann abhängig von den zur Erzeugung des Echtheitsmerkmals 22 gewählten Transformationen eine genauere Verifikation eines im Umlauf befindlichen Produkts 21 ermöglichen.

In Schritt S8 verknüpft die Steuereinrichtung 23 die Produktidentifikation 27 und etwaige Transformationsdaten 22t', 22t des betreffenden Produkts 21 zu einem Produktdatensatz 29, um so einen überprüfbaren Zusammenhang zwischen einem bestimmten Produkt 21 (über dessen Produktidentifikation 27) und dem zugehörigen Echtheitsmerkmal 22 herzustellen. Anschließend wird der Produktdatensatz 29 an die Zentraleinrichtung 10 bzw. deren Produktdatenbank 11 übertragen und dort in Schritt S9 hinterlegt, womit das Produkt 21 dann ordnungsgemäß registriert ist und verifiziert werden kann.

Durch die intrinsische Verknüpfung des (unabhängig und möglichst zufällig ausgestalteten) Echtheitsmerkmals 22 mit der Produktidentifikation 12 in Form der hinterlegten Produktidentifikation 27 wird sichergestellt, dass Rückschlüsse auf das Echtheitsmerkmal 22 nicht möglich sind, da das Echtheitsmerkmal einerseits unabhängig von etwaigen Merkmalen des Produkts oder dessen Herstellung ist und andererseits ein konkretes Echtheitsmerkmal 22 in Form einer konkreten Anwendung der Transformationen 22t', 22t in der Produktidentifikation 27 vorliegt - und nicht etwa nur die abstrakten Transformationsvorschriften 22t', 22t. Insofern könnte die Produktidentifikation 27 selbst dann nicht gefälscht werden, wenn die abstrakten Transformationsdaten 22t', 22t vorlägen, denn aufgrund der Zufallskomponenten (z.B. bei Rauschprozessen wie dem Impulsrauschen in Fig. 2b) ist aus der Transformation 22t' das konkrete Echtheitsmerkmal 22 (also z.B. die genauen Positionen und Intensitäten der Impulse in Fig. 2b) nicht reproduzierbar. Dadurch kann also sowohl die Echtheit des Produkts 21 als auch die Echtheit der Produktidentifikation 27 sichergestellt werden, so dass sowohl das Ausstatten eines gefälschten Produkts mit einer entwendeten, echten Produktidentifikation 12 ausgeschlossen werden kann (da kein entsprechender Produktdatensatz 29 mit Echtheitsmerkmal 22 vorliegt) als auch das Ausstatten eines echten Produkts 21 mit einer eingeschleusten, gefälschten Produktidentifikation.

Ebenso wenig kann die aufgebrachte Produktidentifikation 27 durch Kopieren bzw. Abtasten und Ausdrucken gefälscht werden, denn das Echtheitsmerkmal 22 bzw. die Transformationen 22t', 22t sind derart ausgestaltet, dass die Produktidentifikation 27 nicht mit der für ein möglichst unverfälschtes Beibehalten des Echtheitsmerkmals 22 erforderlichen Genauigkeit kopiert werden kann. Dies zeigt sich beispielsweise anhand von Fig. 2d, die eine Kopie 30 der aufgebrachten, transformierten Produktidentifikation 27 darstellt, aus der zumindest das Impulsrauschen und die tonnen-/kissenartigen lokalen Verzeichnungen nicht derart genau als Vergleichsechtheitsmerkmal abgeleitet werden können, dass eine Verifikation gegenüber der hinterlegten Produktidentifikation 27 und dem intrinsischen Echtheitsmerkmal 22 zu gewährleistet ist.

Bei der Erzeugung und Hinterlegung des Produktdatensatzes 29 mit den Schritten S8 und S9 ist aus Sicherheitsgründen darauf zu achten, dass eine Verknüpfung oder Verzahnung der Produktidentifikation 27 und des Echtheitsmerkmals 22 vorliegt, so dass einem entstehenden Produktdatensatz 29 weder die Produktidentifikation 12 (also ohne das Echtheitsmerkmal 22) noch das Echtheitsmerkmal 22 separat entnommen werden können. Dies ist in jedem Falle dann gewährleistet wenn der Produktdatensatz 29 nur die transformierte Produktidentifikation 27 und nicht auch noch die Transformationsdaten 22t', 22t enthält. Andererseits können die Transformationsdaten 22t', 22t wie oben bereits erwähnt für eine Plausibilitätsprüfung der Produktidentifikation 27 verwendet werden, indem geprüft wird, ob die hinterlegten Transformationsdaten 22t', 22t mit dem Echtheitsmerkmal 22 korrespondieren. Hierdurch kann das Einschleusen von gefälschten Produktidentifikationen 27 und/oder gefälschten Echtheitsmerkmalen 22 ausgeschlossen werden.

Alternativ zu dem Erfassen und Hinterlegen der Produktidentifikation 27 mit dem Echtheitsmerkmal 22 kann z.B. die Steuereinrichtung 23 in Schritt S8, wie in Fig. 2e und Fig. 3 gezeigt, lediglich einen repräsentativen Ausschnitt 27' aus der erfassten Produktidentifikation 27 auswählen und zum Zweck des Speicherplatz- und Rechenzeitsparens nur diesen in der Produktdatenbank 11 hinterlegen. Andererseits kann weiterhin die vollständige Produktidentifikation 27 hinterlegt werden, um deren Verifikation zu gewährleisten, und ein Ausschnitt 27' definiert werden, so dass zumindest die Vergleichsoperation im Rahmen einer Verifikation beschleunigt wird. In jedem Fall sind zusätzlich Koordinatendaten (nicht dargestellt) in der Produktdatenbank 11 zu hinterlegen, die den gewählten Ausschnitt 27' angeben bzw. definieren und ein Auswählen des gleichen Ausschnitts aus einer aufgedruckten Produktidentifikation 26 eines im Umlauf befindlichen Produkts 21 zu Verifikationszwecken ermöglichen.

Der Ausschnitt 27' ist hierbei derart aus der transformierten Produktidentifikation 27 auszuwählen, dass das Echtheitsmerkmal 22 daraus hinreichend genau abgeleitet werden kann, um den Vergleich des hinterlegten Ausschnitts 27' der Referenzproduktidentifikation 27 mit einem entsprechenden Ausschnitt aus einer von dem gleichen Produkt 21 entnommenen Vergleichsproduktidentifikation 26 zu bestehen. Zum Beispiel kann der Ausschnitt 27' anhand von auffälligen Anteilen des Echtheitsmerkmals 22 festgelegt werden, z.B. ein besonders deutlicher Rauschimpuls oder Bildartefakt. Beim Erfassen eines solchen Ausschnitts einer Vergleichsproduktidentifikation 26 kann einerseits mit Hilfe der hinterlegten Ausschnittsdefinition direkt lediglich der entsprechende Ausschnitt erfasst werden oder es kann zunächst die gesamte Vergleichsproduktidentifikation 26 erfasst werden, um den Ausschnitt anschließend daraus zu extrahieren. Darüber hinaus ist es auch möglich, den Ausschnitt variierend auszuwählen, um bei jeder Verifikation einen individuellen Ausschnitt zu verwenden.

## Patentansprüche

1. Verfahren zum Kennzeichen eines hergestellten Produkts (21), umfassend die Schritte:
- Erzeugen (S1) und Aufbringen (S5) einer Produktidentifikation (12, 26) auf das Produkt (21);
- Erfassen (S6) der auf dem Produkt (21) aufgebrachten Produktidentifikation (26); und
- Hinterlegen (S8, S9) der erfassten Produktidentifikation (27) in einer Produktdatenbank (11);
wobei ein unabhängiges Echtheitsmerkmal (22) bestimmt wird (S3, S5) und zusammen mit der Produktidentifikation (12, 26) auf das Produkt (21) aufgebracht (S5) und in der Produktdatenbank (11) hinterlegt wird (S8, S9),
wobei das Echtheitsmerkmal (22) zufällig bestimmt wird (S3, S5) und die Produktidentifikation (12,16) mit einer individuellen Rauschabweichung, einer individuellen Kontrast- oder Farbabweichung, einer individuellen Verzeichnung, Verzerrung und/ oder Verkippung oder einer individuellen Translation und/oder Rotation (22t', 22t) gegenüber dem Produkt (21) als Echtheitsmerkmal (22) verknüpft (S3, S5) und auf das Produkt (21) aufgebracht wird (S5), **dadurch gekennzeichnet, dass** die Produktidentifikation (12,26) als Druckbild und das Echtheitsmerkmal (22) als Artefakt des Druckbilds auf das Produkt (21) aufgebracht wird (S5) und eine Reproduktion (26) des artefaktbehafteten Druckbilds erfasst (S6) und zumindest teilweise in der Datenbank (11) hinterlegt wird (S8, S9),
wobei die Produktidentifikation (12, 26) ein Datamatrix-Code ist.

2. Verfahren nach Anspruch 1, **dadurch gekennzeichnet, dass** das Echtheitsmerkmal (22) unabhängig von einer Kennzeichnungseinrichtung (20) bestimmt wird (S3, S5), die die Produktidentifikation (12, 26) auf das Produkt (21) aufbringt (S6).

3. Verfahren nach Anspruch 1 oder 2, **dadurch gekennzeichnet, dass** das Echtheitsmerkmal (22) unabhängig von einem Herstellungsprozess (28) und/oder von einer Herstellungsvorrichtung bestimmt wird (S3, S5), gemäß dem bzw. mit der das Produkt (21) erzeugt wurde.

4. Verfahren nach einem der Ansprüche 1 bis 3, **dadurch gekennzeichnet, dass** das Echtheitsmerkmal (22) von einer Kennzeichnungseinrichtung (24) zusammen mit der Produktidentifikation (12, 26) auf das Produkt (21) aufgebracht wird (S5).

5. Verfahren nach Anspruch 1, **dadurch gekennzeichnet, dass** die Produktidentifikation (12, 26) mit dem Echtheitsmerkmal (22) derart verknüpft wird (S3, S5), dass weder die Produktidentifikation (12, 26) noch das Echtheitsmerkmal (22) separat manipuliert werden können.

6. Verfahren nach einem der Ansprüche 1 bis 5, **dadurch gekennzeichnet, dass** das Echtheitsmerkmal (22) derart zusammen mit der Produktidentifikation (12, 26) als Vergleichsechtheitsmerkmal auf das Produkt (21) aufgebracht (S5) und als Referenzechtheitsmerkmal (22t', 22t, 27) in der Produktdatenbank (11) hinterlegt wird (S8, S9), dass das Vergleichsechtheitsmerkmal von dem Produkt (21) ableitbar und gegenüber dem Referenzechtheitsmerkmal (22t', 22t, 27) verifizierbar ist.

7. Verfahren nach Anspruch 6, **dadurch gekennzeichnet, dass** das Echtheitsmerkmal (22) zusammen mit der Produktidentifikation (26) erfasst (S6) und das erfasste Echtheitsmerkmal (22) als Referenzechtheitsmerkmal (22t', 22t, 27) in der Produktdatenbank (11) hinterlegt wird (S8, S9).

8. Verfahren nach Anspruch 6 oder 7, **dadurch gekennzeichnet, dass** in der zusammen mit dem Echtheitsmerkmal (22) erfassten Produktidentifikation (27) ein Ausschnitt (27') definiert wird, aus dem das Echtheitsmerkmal (22) derart genau ableitbar ist, dass ein von dem Produkt (21) abgeleitetes Vergleichsmerkmal gegenüber dem hinterlegten Referenzmerkmal (22t', 22t, 27) verifizierbar ist, und die Produktidentifikation (27) zusammen mit der Ausschnittsdefinition in der Datenbank (11) hinterlegt wird (S8, S9).

9. Kennzeichnungsvorrichtung (20), umfassend eine Kennzeichnungseinrichtung (24), die eingerichtet ist, eine eindeutige Produktidentifikation (26) auf ein hergestelltes Produkt (21) aufzubringen, eine Erfassungseinrichtung (25), die eingerichtet ist, die Produktidentifikation (26) auf dem Produkt (21) zu erfassen, und eine Steuereinrichtung (23), die eingerichtet ist, die Produktidentifikation (12) von einer Zentraleinrichtung (10) zu empfangen und die erfasste Produktidentifikation (27) an die Zentraleinrichtung (10) zum Hinterlegen in einer Produktdatenbank (11) zu übertragen,
wobei die Steuereinrichtung (23) weiterhin eingerichtet ist, ein unabhängiges Echtheitsmerkmal (22) zu bestimmen und zusammen mit der Produktidentifikation (17) an die Zentraleinrichtung (10) zum Hinterlegen in der Produktdatenbank (11) zu übertragen und ein Aufbringen des bestimmten, unabhängigen Echtheitsmerkmals (22) auf das Produkt (21) zusammen mit der Produktidentifikation (26) durch die Kennzeichnungseinrichtung (25) zu bewirken, wobei die Steuereinrichtung eingerichtet ist, das Echtheitsmerkmal zufällig zu bestimmen und die Produktidentifikation (12,16) mit einer individuellen Rauschabweichung, einer individuellen Kontrast- oder Farbabweichung, einer individuellen Verzeichnung, Verzerrung und/ oder Verkippung oder einer individuellen Translation und/ oder Rotation (22t', 22t) gegenüber dem Produkt (21) als Echtheitsmerkmal (22) zu verknüpfen, **dadurch gekennzeichnet, dass** die Produktidentifikation (12, 26) ein Datamatrix-Code ist, und die Kennzeichnungsvorrichtung eingerichtet ist die Produktidentifikation (12, 26) als Druckbild und das Echtheitsmerkmal (22) als Artefakt des Druckbilds auf das Produkt (21) aufzubringen (S5) und eine Reproduktion (26) des artefaktbehafteten Druckbilds zu erfassen (S6) und zumindest teilweise in der Datenbank (11) zu hinterlegen (S8, S9).

10. Kennzeichnungsvorrichtung (20) nach Anspruch 9, **dadurch gekennzeichnet, dass** die Kennzeichnungsvorrichtung (20) eingerichtet ist, in Wechselwirkung mit der die Produktdatenbank (11) umfassenden Zentraleinrichtung (10) ein Verfahren nach einem der Ansprüche 1 bis 8 durchzuführen.

## Claims

1. A method for marking a manufactured product (21) including the steps of:
- producing (S1) and applying (S5) a product identification (12, 26) to the product (21);
- capturing (S6) the product identification (26) applied to the product (21); and
- storing (S8, S9) the captured product identification (27) in a product database (11);
wherein an independent authenticity feature (22) is determined (S3, S5) and applied (S5) together with the product identification (12, 26) to the product (21) and stored (S8, S9) in the product database (11),
wherein the authenticity feature (22) is determined randomly (S3, S5) and the product identification (12, 16) is connected (S3, S5) with an individual noise deviation, an individual contrast deviation or color deviation, an individual deformation , distortion and/or tilt or an individual translation and/or rotation (22t', 22t) with reference to the product (21) as the authenticity feature (22) and applied (S5) to the product (21), **characterized in that** the product identification (12, 26) is applied (S5) as a printed image and the authenticity feature (22) as an artifact of the printed image to the product (21) and a reproduction (26) of the artifact-bearing printed image is captured (S6) and stored (S8, S9) at least partially in the database (11),
wherein the product identification (12, 26) is a data matrix code.

2. The method according to claim 1, **characterized in that** the authenticity feature (22) is determined (S3, S5) independently of a marking device (20) applying (S6) the product identification (12, 26) to the product (21).

3. The method according to claim 1 or 2, **characterized in that** the authenticity feature (22) is determined (S3, S5) independently of a manufacturing process (28) and/or of a manufacturing apparatus according to which or by which the product (21) was produced.

4. The method according to any of the claims 1 to 3, **characterized in that** the authenticity feature (22) is applied (S5) together with the product identification (12, 26) to the product (21) by a marking device (24).

5. The method according to claim 1, **characterized in that** the product identification (12, 26) is connected (S3, S5) with the authenticity feature (22) such that neither the product identification (12, 26) nor the authenticity feature (22) can be tampered separately.

6. The method according to any of the claims 1 to 5, **characterized in that** the authenticity feature (22) is so applied (S5) to the product (21) together with the product identification (12, 26) as comparative authenticity feature and stored (S8, S9) as reference authenticity feature (22t', 22t, 27) in the product database (11) that the comparative authenticity feature can be derived from the product (21) and verified with reference to the reference authenticity feature (22t', 22t, 27).

7. The method according to claim 6, **characterized in that** the authenticity feature (22) is captured (S6) together with the product identification (26), and the captured authenticity feature (22) is stored (S8, S9) as reference authenticity feature (22t', 22t, 27) in the product database (11).

8. The method according to claim 6 or 7, **characterized in that** in the product identification (27) captured together with the authenticity feature (22) a portion (27') is defined, from which the authenticity feature (22) can be derived with such accuracy that a comparative feature derived from the product (21) is verifiable with reference to the stored reference feature (22t', 22t, 27) and the product identification (27) is stored (S8, S9) in the database (11) together with the portion definition.

9. A marking apparatus (20), including a marking device (24) adapted to apply a unique product identification (26) to a manufactured product (21), a capturing device (25) adapted to capture the product identification (26) on the product (21), and a control device (23) adapted to receive the product identification (12) from a central device (10) and to transmit the captured product identification (27) to the central device (10) for storing in a product database (11),
wherein the control device (23) is further adapted to determine an independent authenticity feature (22) and transmit the same together with the product identification (17) to the central device (10) for storing in the product database (11) and to effectuate an application of the determined, independent authenticity feature (22) to the product (21) together with the product identification (26) by the marking device (25), wherein the control device is adapted to determine the authenticity feature randomly and to connect the product identification (12, 26) with an individual noise deviation, an individual contrast deviation or color deviation, an individual deformation, distortion and/or tilt or an individual translation and/or rotation (22t', 22t) with reference to the product (21) as the authenticity feature (22),
**characterized in that** the product identification (12, 26) is a data matrix code and the marking apparatus is adapted to apply (S5) the product identification (12, 26) as a printed image and the authenticity feature (22) as an artifact of the printed image to the product (21) and to capture (S6) a reproduction (26) of the artifact-bearing printed image and store (S8, S9) the same at least partially in the database (11).

10. The marking apparatus (20) according to claim 9, **characterized in that** the marking apparatus (20) is adapted to carry out, in interaction with the central device (10) including the product database (11), a method according to any of the claims 1 to 8.

## Revendications

1. Procédé de marquage d'un produit (21) fabriqué, comprenant les étapes:
- génération (S1) et application (S5) d'une identification du produit (12, 26) sur le produit (21);
- saisie (S6) de l'identification du produit (26) appliquée sur le produit (21); et
- enregistrement (S8, S9), dans une banque de données de produits (11), de l'identification du produit (27) saisie ;
cependant qu'une caractéristique d'authenticité (22) indépendante est déterminée (S3, S5) et appliquée (S5) sur le produit (21) aussi que l'identification du produit (12, 26) et est enregistrée (S8, S9) dans une banque de données de produits (11),
cependant que la caractéristique d'authenticité (22) est déterminée (S3, S5) aléatoirement et l'identification du produit (12, 26) est liée (S3, S5) à une divergence de bruit individuelle, à une divergence de contrastes ou de couleurs individuelle, à une déformation, une distorsion et/ou un basculement d'image individuel ou à une translation et/ou rotation individuelle (22t', 22t) par rapport au produit (21) en tant que caractéristique d'authenticité (22) et est appliquée (S5) sur le produit (21), **caractérisé en ce que** l'identification du produit (12, 26) est appliquée (S5) sur le produit (21) sous forme d'image imprimée et la caractéristique d'authenticité (22) l'est sous forme d'artefact de l'image imprimée, et **en ce qu'**une reproduction (26) de l'image imprimée présentant l'artefact est saisie (S6) et au moins partiellement enregistrée (S8, S9) dans la banque de données (11),
cependant que l'identification du produit (12, 26) est un code Datamatrix.

2. Procédé selon la revendication 1, **caractérisé en ce que** la caractéristique d'authenticité (22) est déterminée (S3, S5) indépendamment d'un équipement de marquage (20) qui applique (S6) l'identification du produit (12, 26) sur le produit (21).

3. Procédé selon la revendication 1 ou 2, **caractérisé en ce que** la caractéristique d'authenticité (22) est déterminée (S3, S5) indépendamment d'un processus de fabrication (28) et/ou d'un dispositif de fabrication suivant lequel ou avec lequel le produit (21) fut généré.

4. Procédé selon une des revendications de 1 à 3, **caractérisé en ce que** la caractéristique d'authenticité (22) est appliquée (S5) sur le produit (21) par un équipement de marquage (24) aussi que l'identification du produit (12, 26).

5. Procédé selon la revendication 1, **caractérisé en ce que** l'identification du produit (12, 26) est liée (S3, S5) de telle façon à la caractéristique d'authenticité (22) que ni l'identification du produit (12, 26), ni la caractéristique d'authenticité (22) ne peuvent être manipulées séparément.

6. Procédé selon une des revendications de 1 à 5, **caractérisé en ce que** la caractéristique d'authenticité (22) est de telle façon, en tant que caractéristique d'authenticité de comparaison, appliquée (S5) sur le produit (21) aussi que l'identification du produit (12, 26) et, en tant que caractéristique d'authenticité de référence (22t', 22t, 27), enregistrée (S8, S9) dans la banque de données de produits (11), que la caractéristique d'authenticité de comparaison peut être déduite du produit (21) et est vérifiable par rapport à la caractéristique d'authenticité de référence (22t', 22t, 27).

7. Procédé selon la revendication 6, **caractérisé en ce que** la caractéristique d'authenticité (22) est saisie (S6) aussi que l'identification du produit (26) et **en ce que** la caractéristique d'authenticité (22) saisie est enregistrée (S8, S9) dans la banque de données de produits (11) en tant que caractéristique d'authenticité de référence (22t', 22t, 27).

8. Procédé selon la revendication 6 ou 7, **caractérisé en ce que**, dans l'identification du produit (27) saisie aussi que la caractéristique d'authenticité (22), un fragment (27') est défini, à partir duquel la caractéristique d'authenticité (22) peut être déduite de telle façon exactement qu'une caractéristique de comparaison déduite du produit (21) est vérifiable par rapport à la caractéristique de référence (22t', 22t, 27) enregistrée, et l'identification du produit (27) est enregistrée (S8, S9) dans la banque de données (11) aussi que la définition du fragment.

9. Dispositif de marquage (20) comprenant un équipement de marquage (24) conçu pour appliquer une identification univoque du produit (26) sur un produit (21) fabriqué, un équipement de saisie (25) conçu pour saisir l'identification du produit (26) sur le produit (21), et un équipement de commande (23) conçu pour recevoir l'identification du produit (12) de la part d'un équipement central (10) et pour transmettre l'identification du produit (27) saisie à l'équipement central (10) pour enregistrement dans une banque de données de produits (11),
l'équipement de commande (23) étant en outre conçu pour déterminer une caractéristique d'authenticité (22) indépendante et pour la transmettre aussi que l'identification du produit (17) à l'équipement central (10) pour enregistrement dans une banque de données de produits (11) et pour déclencher une application de la caractéristique d'authenticité (22) déterminée indépendante sur le produit (21) aussi que l'identification du produit (26) par l'équipement de marquage (25), l'équipement de commande étant conçu pour déterminer aléatoirement la caractéristique d'authenticité et pour lier l'identification du produit (12, 26) à une divergence de bruit individuelle, à une divergence de contrastes ou de couleurs individuelle, à une déformation, une distorsion et/ou un basculement d'image individuel ou à une translation et/ou rotation individuelle (22t', 22t) par rapport au produit (21) en tant que caractéristique d'authenticité (22), **caractérisé en ce que** l'identification du produit (12, 26) est un code Datamatrix, et **en ce que** le dispositif de marquage est conçu pour appliquer (S5) sur le produit (21) l'identification du produit (12, 26) sous forme d'image imprimée et la caractéristique d'authenticité (22) sous forme d'artefact de l'image imprimée et pour saisir (S6) une reproduction (26) de l'image imprimée présentant l'artefact et l'enregistrer (S8, S9) au moins partiellement dans la banque de données (11).

10. Dispositif de marquage (20) selon la revendication 9, **caractérisé en ce que** l'équipement de marquage (20) est conçu pour exécuter, en interaction avec l'équipement central (10) comprenant la banque de données de produits (11), un processus selon une des revendications de 1 à 8.
